# FASCICULE DE BREVET EUROPEEN

(11) **EP 1 637 747 B1**
(45) Date de publication et mention de la délivrance du brevet: **23.01.2008**
(21) Numéro de dépôt: 05300615.1
(22) Date de dépôt: 22.07.2005
(51) Int. Cl.: F16B 7/18

(54) **Agencement de fixation d'un élèment d'équipement pour véhicule automobile**
Anordnung zur Festlegung eines Ausstattungselements für ein Kraftfahrzeug
Arrangement for fixing of an equipment element for a motor vehicle

(30) Priorité: 17.09.2004 FR 0452085
(43) Date de publication de la demande: 22.03.2006
(73) Titulaire: Renault, 92109 Boulogne Billancourt (FR)
(72) Inventeur: Cousseau, Sylvain, 78000, VERSAILLES (FR); Madeleine, Pierre, 78180, MONTIGY LE BRETONNEUX (FR); Samara, Vincent, 91120, PALAISEAU (FR); Tilly, Claude, 78000, VERSAILLES (FR)

(56) Documents cités:
- FR-A- 2 421 297
- NL-C2- 1 000 544

## Description

La présente invention concerne un agencement pour la fixation par vissage d'un élément d'équipement, notamment un attelage ou un porte-vélos, dans un corps creux tel qu'un longeron tubulaire (FR-A 2421297).

L'invention concerne plus particulièrement un agencement pour la fixation par vissage d'un élément d'équipement, notamment un attelage ou un porte-vélos, sur un corps creux, dans lequel l'élément d'équipement est accosté à une première paroi du corps creux, au moyen d'un perçage réalisé dans l'élément d'équipement correspondant à un perçage réalisé dans la première paroi, de sorte qu'une vis de fixation peut traverser l'élément d'équipement et la première paroi et coopérer avec un écrou pour serrer l'élément d'équipement contre la première paroi, cette vis étant montée en partie à l'intérieur d'une entretoise qui est en appui contre la face interne de la première paroi.

Conventionnellement, un tel agencement comporte une vis qui est reçue dans un écrou prisonnier d'une cage solidaire du corps creux, ou qui est soudé au corps creux. Une telle cage peut traverser une paroi de l'élément tubulaire.

Dans ces différents agencements, dont un exemple est divulgué dans le document FR 03-15056 et dans lesquels le corps de vis et l'écrou permettent un serrage de la deuxième paroi de l'élément tubulaire, la tête de vis est en appui contre la face extérieure de l'élément d'équipement, assurant ainsi le pinçage de cet élément d'équipement contre la première paroi de l'élément tubulaire. Ces agencements visent à solidariser l'élément d'équipement à l'élément tubulaire en assurant un serrage de cet élément tubulaire sur ces deux parois.

De tels agencements doivent prendre en compte les dispersions de fabrication de l'élément tubulaire. A titre d'exemple, ces dispersions peuvent prendre une valeur d'environ trois degrés pour chaque paroi par rapport à la verticale. Les caractéristiques géométriques de l'agencement de fixation doivent ainsi répondre à ces contraintes pour assurer le pinçage de chaque paroi de l'élément tubulaire.

Un des objectifs de l'invention est donc de proposer un agencement de fixation qui permette une fixation efficace de l'élément d'équipement sur un élément tubulaire, cette fixation étant reproductible à tous les véhicules quelle que soit la dispersion de fabrication de l'élément tubulaire.

En réponse à des objectifs que l'on retrouve invariablement chez les différents constructeurs automobiles, la présente invention se veut également peu coûteuse et peu encombrante.

Pour répondre à ces objectifs, l'invention propose un agencement de fixation par vissage d'un élément d'équipement tel que décrit dans la revendication 1.

Selon différentes caractéristiques de la présente invention,
- l'extrémité de l'entretoise située hors du corps creux est prolongée par une collerette radiale de diamètre supérieure au diamètre du perçage de la deuxième paroi du corps creux.
- un élément en caoutchouc est positionné entre la deuxième paroi du corps creux et la collerette de l'entretoise.
- la collerette est perpendiculaire à l'entretoise.
- la collerette est inclinée par rapport à une perpendiculaire de l'entretoise, d'un angle d'une valeur au moins équivalente à l'angle de dispersion de fabrication du corps creux.
- l'élément d'équipement est formé d'une traverse sur laquelle est montée un crochet d'attelage, cette traverse étant montée sur deux tirants sensiblement parallèles, et en ce que chaque tirant est solidarisé à une paroi d'un corps creux de la structure arrière du véhicule.
- les tirants de l'élément d'équipement sont solidarisés sur la face extérieure de la paroi extérieure du corps creux.

L'invention vise à protéger également un véhicule automobile comprenant un élément d'équipement fixé à la structure arrière au moyen d'un agencement de fixation tel que revendiqué dans l'invention.

D'autres caractéristiques et avantages de l'invention apparaîtront à la lecture de la description détaillée qui suit pour la compréhension de laquelle on se reportera aux dessins annexés dans lesquels :
- la figure 1 est une représentation schématique d'une structure arrière de véhicule automobile, comportant un élément d'équipement et un agencement de fixation de cet élément d'équipement selon l'invention.
- la figure 2 est une vue en coupe d'un agencement de fixation selon l'invention.

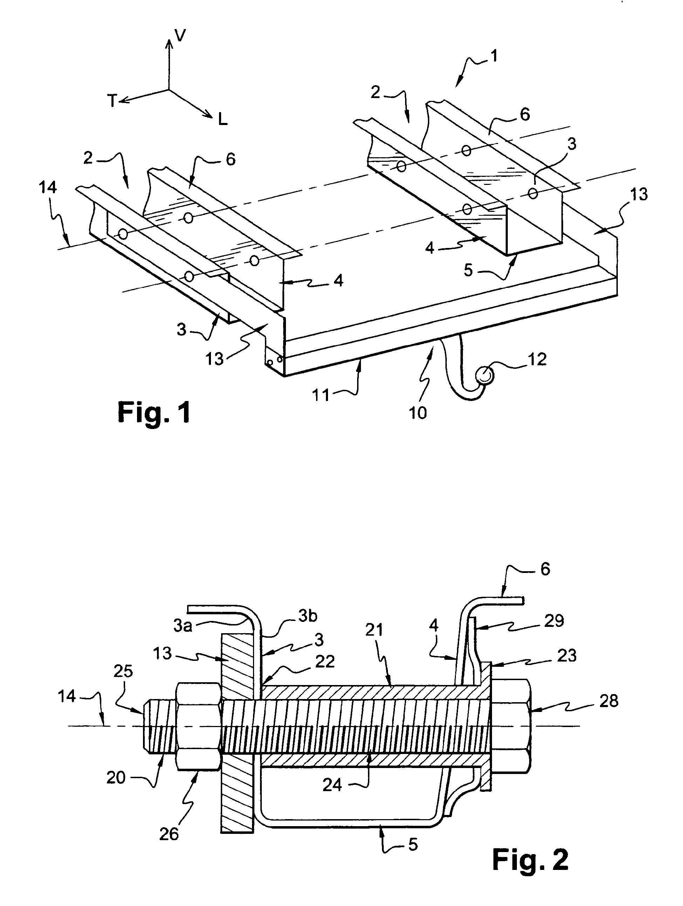

Dans la description qui va suivre, on adoptera à titre non limitatif une orientation longitudinale, verticale et transversale selon l'orientation traditionnellement utilisée dans l'automobile et indiquée par le trièdre L, V, T de la figure 1.

Telle que représentée à la figure 1, une structure arrière 1 de véhicule automobile est formée d'au moins deux éléments tubulaires 2 sensiblement longitudinaux. Ces éléments tubulaires, corps creux appelés également longerons, présentent la forme d'un U. Deux parois 3 et 4 sensiblement verticales et parallèles sont reliées par un fond 5 sensiblement horizontal. Des pattes de fixation 6 prolongeant à angle droit chaque paroi du longeron 2 permettent le soudage du plancher du véhicule sur ces longerons 2.

Un élément d'équipement 10 est solidarisé aux longerons 2 de la structure arrière 1 du véhicule. A titre d'exemple un attelage 10, tel que représenté aux figures 1 et 2, est formé d'une traverse 11 au milieu de laquelle est monté un crochet d'attelage 12. Cette traverse 11 est montée sur deux tirants 13 sensiblement parallèles, chaque tirant 13 étant solidarisé à un longeron 2 de la structure arrière 1 du véhicule. Chaque tirant 13 peut présenter deux trous de fixation pour permettre la fixation de ce tirant 13 sur le longeron 2 associé. Dans ce cas, quatre trous de fixation correspondants sont réalisés sur chaque corps creux 2 de la structure arrière 1. Dans la description du mode de réalisation qui va suivre, le tirant 13 est fixé sur la paroi 3 de chaque longeron 2 qui est orientée vers l'extérieure du véhicule. Il sera compris que les tirants 13 peuvent également être plaqués contre la paroi intérieure des corps creux 2, la première paroi telle qu'elle va être décrite par la suite étant alors intérieure.

Tel que représenté à titre d'exemple à la figure 2, un agencement selon l'invention est formé de deux tirants 13 de l'élément d'équipement 10 plaqués chacun contre la face extérieure 3a d'une première paroi extérieure 3 d'un corps creux. Chaque tirant 13 est positionné de sorte qu'un perçage du tirant 13, un perçage de la première paroi extérieure 3 et un perçage de la deuxième paroi intérieure 4 sont alignés, formant un axe sensiblement transversal 14.

Une vis de fixation 20 est montée dans une entretoise 21, cette entretoise 21 étant positionnée à l'intérieur du corps creux 2. Cette entretoise 21 présente à titre d'exemple une forme sensiblement cylindrique, creuse, dont une première extrémité 22 est située à l'intérieur du corps creux 2, en appui contre la première paroi 3 de ce corps creux 2, et dont une deuxième extrémité 23 est située à l'extérieur du corps creux 2, par delà la deuxième paroi 4.

L'entretoise 21 passe ainsi d'une part par un trou formé dans la deuxième paroi intérieure 4 du longeron 2 et d'autre part, la première extrémité 22 de l'entretoise 21 vient en appui contre la face intérieure 3b de la première paroi 3 du corps creux 2. La partie creuse 24 de l'entretoise 21 correspond à un trou formé dans la première paroi 3 du corps creux 2 et au trou de fixation correspondant du tirant d'attelage 13. La vis de fixation 20 montée dans l'entretoise 21 est plus longue que cette entretoise 21, et l'extrémité 25 du corps de vis 20 dépasse du corps creux 2 et du tirant 13, de sorte qu'un écrou 26 peut être vissé sur le pas de la vis de fixation 20 et peut être serré contre le tirant 13.

L'entretoise 21 est plus longue que la largeur du corps creux 2, c'est-à-dire plus longue que la distance entre la première 3 et la deuxième 4 paroi. Ainsi, seule la première paroi 3 du corps creux 2 sur laquelle vient en appui l'élément d'équipement 10 est pincée entre la première extrémité 22 de l'entretoise 21 d'une part, et l'élément d'équipement 10 plaqué par l'écrou 26 d'autre part. Aucune contrainte n'est réalisée sur la deuxième paroi 4 par l'entretoise 21 ou la vis de fixation 20.

L'entretoise 21 est de diamètre plus petit que l'orifice réalisé dans la deuxième paroi 4, afin de permettre un jeu de montage de sorte que, lorsque l'ensemble vis 20-écrou 26 pince la première paroi 3 extérieure, l'entretoise 21 peut être inclinée par rapport à l'horizontale dans une proportion équivalente à l'éventuelle déformation α dû aux dispersions de fabrication du longeron 2. Le fait que seule la première paroi 3 soit pincée, combinée à ce jeu de montage entre l'entretoise 21 et le perçage de la deuxième paroi 4, permet d'éviter une propagation des efforts apparus dans l'entretoise 21 vers la première paroi 3 ou la deuxième paroi 4 du corps creux 2, et permet d'éviter ainsi un flambage de l'une de ces deux parois autour du perçage permettant le passage de la vis de fixation 20.

Un agencement selon l'invention permet ainsi un maintien en position de l'élément d'équipement 10, et à titre d'exemple d'un organe d'attelage, qui est efficace et constant dans le temps. La paroi pincée 3 du longeron 2 n'est pas marquée et la position de la vis de fixation 20 par rapport à cette paroi 3 ne varie pas au fil de la durée de vie du véhicule.

Selon une variante de réalisation, représentée à la figure 2, la deuxième extrémité 23 de l'entretoise 21, située hors du corps creux 2, est prolongée radialement d'une collerette 27. Cette collerette 27 sert de butée à la tête de vis 28 pour la mise en position de cette vis de fixation 20 dans l'entretoise 21. Elle peut également servir de déflecteur pour éviter que des éléments nuisants n'entrent dans le corps creux. A cet effet, il peut également être prévu un élément d'étanchéité 29, et par exemple une bonnette en caoutchouc, qui prenne appui contre cette collerette 27 pour assurer l'étanchéité du perçage effectué dans la paroi 4 opposée à la paroi du longeron pincée 3 entre l'écrou 26 et l'entretoise 21. Il sera compris que, dans le cas non représenté où l'entretoise 21 ne comporte pas de collerette radiale 27 sur laquelle peut venir s'appuyer une bonnette 29, un élément d'étanchéité peut tout de même être prévu, par exemple par un anneau d'étanchéité emmanché dans une gorge réalisée sur le pourtour de l'entretoise 21.

L'invention n'est nullement limitée au mode de réalisation décrit et illustré qui n'a été donné qu'à titre d'exemple.

## Revendications

1. Agencement pour la fixation par vissage d'un élément d'équipement (10) sur un corps creux (2) formé d'au moins deux parois (3,4) sensiblement parallèles, dans lequel l'élément d'équipement (10) est accosté à une première paroi (3) du corps creux (2), au moyen d'un perçage réalisé dans l'élément d'équipement (10) correspondant à un perçage réalisé dans la première paroi (3), de sorte qu'une vis (20) peut traverser l'élément d'équipement (10) et la première paroi (3) et coopérer avec un écrou (26) pour serrer l'élément d'équipement (10) contre la première paroi (3), cette vis de fixation (20) étant montée en partie à l'intérieur d'une entretoise (21) traversant le corps creux (2) qui est en appui contre la face intérieurs (3b) de la première paroi (3), l'entretoise (21) traverse un perçage de la deuxième paroi (4) du corps creux (2), la longueur de l'entretoise (21) étant supérieure à la distance entre la première (3) et la seconde (4) paroi du corps creux (2) et de sorte qu'une extrémité (23) de l'entretoise (21) est située à l'extérieur du corps creux (2) par delà la seconde paroi (4), **caractérisée en ce que** le diamètre de l'entretoise (21) est inférieure au diamètre du perçage de la deuxième paroi (4) du corps creux (2), de sorte qu'un jeu de montage est prévu entre l'entretoise (21) et la seconde paroi (4).

2. Agencement selon la revendication 1, **caractérisé en ce que** l'extrémité (23) de l'entretoise (21) située hors du creux (2) est prolongée par une collerette radiale (27) de diamètre supérieure au diamètre du perçage de la deuxième paroi (4) du corps creux (2).

3. agencement selon la revendication 2, **caractérisé en ce qu**'un élément en caoutchouc (29) est positionné entre la deuxième paroi (4) du corps creux (2) et la collerette (27) de l'entretoise (21).

4. Agencement selon la revendication 2 ou 3, **caractérisé en ce que** la collerette (27) est perpendiculaire à l'entretoise (21).

5. agencement selon la revendication 2 ou 3, **caractérisé en ce que** la collerette (27) est incliné par rapport à une perpendiculaire de l'entretoise (21), d'un angle d'une valeur au moins équivalente à un angle de dispersion (α) de fabrication du corps creux (2).

6. Agencement selon l'une des revendications précédentes, **caractérisé en ce que** l'élément d'équipement (10) est formé d'une traverse (11) étant montée sur deux tirants (13) sensiblement parallèles, et **en ce que** chaque tirant (13) est solidarisé à une paroi (3,4) d'un corps creux (2) de la structure arrière (1) du véhicule.

7. Agencement selon la revendication précédente, **caractérisé en ce que** les tirants (13) de l'élément d'équipement (10) sont solidarisés sur la face extérieure (3a) de la paroi extérieure (3) du corps creux.

8. Véhicule automobile comprenant un élément d'équipement (10) fixé à la structure arrière (1) au moyen d'un agencement de fixation selon l'une des revendications 1 à 7.

## Claims

1. Arrangement for screw-fastening a piece of equipment (10) to a hollow body (2) formed of at least two substantially parallel walls (3, 4), in which arrangement the piece of equipment (10) is mated with a first wall (3) of the hollow body (2) by means of a hole made in the piece of equipment (10) and corresponding to a hole made in the first wall (3) in such a way that a screw (20) can pass through the piece of equipment (10) and the first wall (3) and collaborate with a nut (26) in order to clamp the piece of equipment (10) against the first wall (3), this fastening screw (20) being mounted partially inside a spacer piece (21) that passes through the hollow body (2) and bears against the interior face (3b) of the first wall (3), the spacer piece (21) passes through a hole in the second wall (4) of the hollow body (2), the length of the spacer piece (21) being greater than the distance between the first (3) and the second (4) wall of the hollow body (2) and in such a way that one end (23) of the spacer piece (21) lies outside the hollow body (2) beyond the second wall (4), **characterized in that** the diameter of the spacer piece (21) is smaller than the diameter of the hole in the second wall (4) of the hollow body (2) so that there is some assembly clearance between the spacer piece (21) and the second wall (4).

2. Arrangement according to Claim 1, **characterized in that** the end (23) of the spacer piece (21) lying outside the hollow (2) is extended by a radial flange (27) of a diameter greater than the diameter of the hole in the second wall (4) of the hollow body (2).

3. Arrangement according to Claim 2, **characterized in that** a rubber element (29) is positioned between the second wall (4) of the hollow body (2) and the flange (27) of the spacer piece (21).

4. Arrangement according to Claim 2 or 3, **characterized in that** the flange (27) is perpendicular to the spacer piece (21).

5. Arrangement according to Claim 2 or 3, **characterized in that** the flange (27) is inclined with respect to a perpendicular of the spacer piece (21) by an angle of a magnitude at least equivalent to an angular spread (α) in the manufacture of the hollow body (2).

6. Arrangement according to one of the preceding claims, **characterized in that** the piece of equipment (10) is formed of a crossmember (11) mounted on two substantially parallel stays (13), and **in that** each stay (13) is secured to one wall (3, 4) of a hollow body (2) of the rear structure (1) of the vehicle.

7. Arrangement according to the preceding claim, **characterized in that** the stays (13) of the piece of equipment (10) are secured to the exterior face (3a) of the exterior wall (3) of the hollow body.

8. Motor vehicle comprising a piece of equipment (10) attached to the rear structure (1) by means of a fastening arrangement according to one of Claims 1 to 7.

## Patentansprüche

1. Anordnung zum Befestigen durch Verschrauben eines Ausrüstungselements (10) an einem Hohlkörper (2), der aus wenigstens zwei im Wesentlichen parallelen Wänden (3, 4) gebildet ist, wobei das Ausrüstungselement (10) an eine erste Wand (3) des Hohlkörpers (2) mittels einer Durchlochung angebracht ist, die in dem Ausrüstungselement (10) verwirklicht ist und einer in der ersten Wand (3) verwirklichten Durchlochung entspricht, derart, dass eine Schraube (20) durch das Ausrüstungselement (10) und durch die erste Wand (3) verlaufen und mit einer Mutter (26) zusammenwirken kann, um das Ausrüstungselement (10) gegen die erste Wand (3) zu klemmen, wobei diese Befestigungsschraube (20) teilweise innerhalb einer Querstrebe (21) angebracht ist, die durch den Hohlkörper (2) verläuft und sich an den Innenflächen (3b) der ersten Wand (3) abstützt, wobei die Querstrebe (21) durch eine Durchlochung der zweiten Wand (4) des Hohlkörpers (2) verläuft, wobei die Länge der Querstrebe (21) größer als der Abstand zwischen der ersten Wand (3) und der zweiten Wand (4) des Hohlkörpers (2) ist, derart, dass sich ein Ende (23) der Querstrebe (21) außerhalb des Hohlkörpers (2) jenseits der zweiten Wand (4) befindet, **dadurch gekennzeichnet, dass** der Durchmesser der Querstrebe (21) kleiner als der Durchmesser der Durchlochung der zweiten Wand (4) des Hohlkörpers (2) ist, so dass zwischen der Querstrebe (21) und der zweiten Wand (4) ein Montagespiel vorhanden ist.

2. Anordnung nach Anspruch 1, **dadurch gekennzeichnet, dass** das Ende (23) der Querstrebe (21), das sich außerhalb des Hohlkörpers (2) befindet, durch einen radialen Flansch (27) verlängert ist, dessen Durchmesser größer als der Durchmesser der Durchlochung der zweiten Wand (4) des Hohlkörpers (2) ist.

3. Anordnung nach Anspruch 2, **dadurch gekennzeichnet, dass** zwischen der zweiten Wand (4) des Hohlkörpers (2) und dem Flansch (27) der Querstrebe (21) ein Kautschukelement (29) angeordnet ist.

4. Anordnung nach Anspruch 2 oder 3, **dadurch gekennzeichnet, dass** der Flansch (27) zur Querstrebe (21) senkrecht ist.

5. Anordnung nach Anspruch 2 oder 3, **dadurch gekennzeichnet, dass** der Flansch (27) in Bezug auf eine Senkrechte der Querstrebe (21) um einen Winkel geneigt ist, dessen Wert wenigstens gleich einem Streuwinkel (α) der Fertigung des Hohlkörpers (2) ist.

6. Anordnung nach einem der vorhergehenden Ansprüche, **dadurch gekennzeichnet, dass** das Ausrüstungselement (10) durch einen Querträger (11) gebildet ist, der an zwei im Wesentlichen parallelen Zugstäben (13) angebracht ist, und dass jeder Zugstab (13) mit einer Wand (3, 4) eines Hohlkörpers (2) der hinteren Struktur (1) des Fahrzeugs fest verbunden ist.

7. Anordnung nach dem vorhergehenden Anspruch, **dadurch gekennzeichnet, dass** die Zugstäbe (13) des Ausrüstungselements (10) mit der äußeren Fläche (3a) der Außenwand (3) des Hohlkörpers fest verbunden sind.

8. Kraftfahrzeug, das ein Ausrüstungselement (10) aufweist, das an der hinteren Struktur (1) mittels einer Befestigungsanordnung nach einem der Ansprüche 1 bis 7 befestigt ist.
